# EUROPEAN PATENT APPLICATION

(11) **EP 4 632 886 A1**
(43) Date of publication of application: **15.10.2025**
(21) Application number: 25150068.2
(22) Date of filing: 02.01.2025
(51) Int. Cl.: H01M 50/109, H01M 50/121, H01M 50/186, H01M 50/193

(54) **BUTTON CELL**

(30) Priority: 09.04.2024 KR 20240048177
(71) Applicant: Samsung SDI Co., Ltd., Yongin-si, Gyeonggi-do 17084 (KR)
(72) Inventor: Kim, Dae-Sup, Yongin-si, Gyeonggi-do 17084 (KR)
(74) Representative: Gulde & Partner

(57) **Abstract**

The invention concerns a button cell (1000) that includes an electrode assembly (100) and two cases (300, 400) housing the electrode assembly (100). To reduce the effort for producing the button cell (1000) that conventionally required welding the cases (300, 400) to each other, the button cell (1000) comprises a plastic auxiliary member (200) interconnecting the cases.

## Description

### FIELD

The present invention relates to a button cell.

### BACKGROUND

In general, a rechargeable battery (or a secondary battery) is a battery that may be charged and discharged.

As a demand for a wearable device such as a headphone, an earphone, a smartwatch, a body-attached medical device, or the like using wireless communication such as Bluetooth or the like has recently increased, a need for a button cell that is an ultra-small rechargeable battery installed at the wearable device is increasing.

Such a conventional button cell includes a case accommodating an electrode assembly and connected to a first electrode of the electrode assembly, a cap plate welded to the case, and a terminal plate insulated from and bonded to the cap plate by a bonding layer to be connected to a second electrode of the electrode assembly.

However, the conventional button cell has a problem in which the case and the cap plate are welded in a state in which the electrode assembly is accommodated inside the case and a separator or the like included in the electrode assembly is damaged by a welding heat so that the first electrode and the second electrode of the electrode assembly are short-circuited.

### SUMMARY

A button cell having improved energy density per volume while simultaneously preventing a damage due to a welding heat and a damage due to an external interference and preventing a short circuit is provided.

A button cell includes: an electrode assembly that includes a first electrode, a second electrode, and a separator disposed between the first electrode and the second electrode; a plastic auxiliary member that surrounds an edge of the electrode assembly in a first direction; a first case that is coupled to the plastic auxiliary member to cover a first end portion of the electrode assembly in a second direction crossing the first direction and is connected to the first electrode; and a second case that is coupled to the plastic auxiliary member to cover a second end portion of the electrode assembly in the second direction and is connected to the second electrode. The first case and the second case are free from mutual overlap, i.e. do not overlap each other, in the first direction.

The plastic auxiliary member, the first case, and the second case may seal the electrode assembly.

An end portion of the plastic auxiliary member, an end portion of the first case, and an end portion of the second case that are disposed in the first direction may be disposed on a virtual extension line extending in the second direction.

The plastic auxiliary member may be exposed to outside the button cell between the first case and the second case.

The first direction may include a horizontal direction of the button cell.

The second direction may include a vertical direction of the button cell.

The first end portion of the electrode assembly may include a lower portion of the electrode assembly.

The second end portion of the electrode assembly may include an upper portion of the electrode assembly.

The plastic auxiliary member may include a first adhesive portion protruding toward the first case to be coupled to an inner surface of the first case.

The first adhesive portion may include a first protruding portion that protrudes toward the inner surface of the first case.

The first case may include a first recessed portion into which the first protruding portion is inserted. The first recessed portion may be recessed from or into the inner surface of the first case.

The plastic auxiliary member may further include a first auxiliary recessed portion into which a side wall of the first case is inserted. The first auxiliary recessed portion may be recessed in the second direction.

The first case may include a first auxiliary protruding portion that protrudes from the side wall of the first case toward the first auxiliary recessed portion to be inserted into the first auxiliary recessed portion.

The plastic auxiliary member may include a second adhesive portion that protrudes toward the second case to be coupled to an inner surface of the second case.

The second adhesive portion may include a second protruding portion that protrudes toward the inner surface of the second case.

The second case may include a second recessed portion into which the second protruding portion is inserted. The second recessed portion may be recessed from or into the inner surface of the second case.

The plastic auxiliary member may further include a second auxiliary recessed portion into which a side wall of the second case is inserted. The second auxiliary recessed portion may be recessed in the second direction.

The second case may include a second auxiliary protruding portion that protrudes from the side wall of the second case toward the second auxiliary recessed portion to be inserted into the second auxiliary recessed portion.

The first case and the second case may be rolled with and coupled to the plastic auxiliary member.

The electrode assembly may further include: a first electrode tab that extends from the first electrode to be welded to the first case; and a second electrode tab that extends from the second electrode to be welded to the second case.

Hence, the button cell may include an electrode assembly and two cases housing the electrode assembly. The button cell may comprise a plastic auxiliary member that interconnects the cases.

The first case and the second case may be arranged at a distance to each other with the plastic auxiliary member between the first case and the second case. The plastic auxiliary member may be interposed between the cases of the button cell.

According to the embodiments, a button cell having improved energy density per volume while simultaneously preventing a damage due to a welding heat and a damage due to an external interference and preventing a short circuit, may be provided.

### BRIEF DESCRIPTION OF THE DRAWINGS

FIG. 1 is a perspective view showing a button cell according to embodiments.
FIG. 2 is a cross-sectional view taken along a line II-II of FIG. 1.
FIG. 3 is an enlarged view of a portion A of FIG. 2.
FIG. 4 is an enlarged view of a portion B of FIG. 2.
FIG. 5 is a cross-sectional view showing a button cell according to other embodiments.
FIG. 6 is an enlarged view of a portion C of FIG. 5.
FIG. 7 is an enlarged view of a portion D of FIG. 5.

### DETAILED DESCRIPTION

Embodiments of the present disclosure will be described more fully hereinafter with reference to the accompanying drawings so that those skilled in the art easily implement the embodiments. The present disclosure may be modified in various different ways, all without departing from the scope of the present disclosure.

In addition, unless explicitly described to the contrary, the word "comprise" and variations such as "comprises" or "comprising" will be understood to imply the inclusion of stated elements but not the exclusion of any other elements.

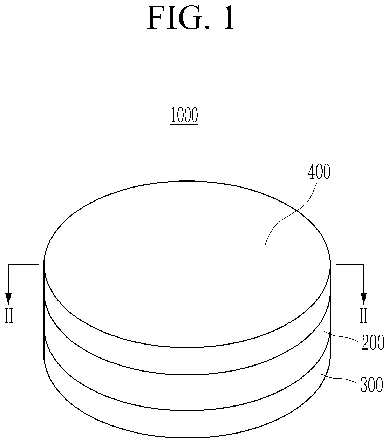

Hereinafter, a button cell according to embodiments will be described with reference to FIGS. 1 to 4.

The button cell according to the embodiments may be an ultra-small rechargeable battery (or an ultra-small secondary battery), and may include a coin cell, but the present disclosure is not limited thereto, and it may include a cylindrical or pin-type cell.

Here, the button cell may be a thin coin-type or button-type cell, and may mean a battery having a ratio (height/diameter) of a height to a diameter of one or less, but the present disclosure is not limited thereto. Because the button cell may be mainly cylindrical, a horizontal cross-section may be circular, but the present disclosure is not limited thereto, and a horizontal cross-section may be oval or polygonal. In this case, the diameter may mean a maximum distance of the cell based on a horizontal direction of the cell, and the height may mean a maximum distance (distance from a flat bottom surface thereof to a flat uppermost surface) of the cell based on a vertical direction of the cell.

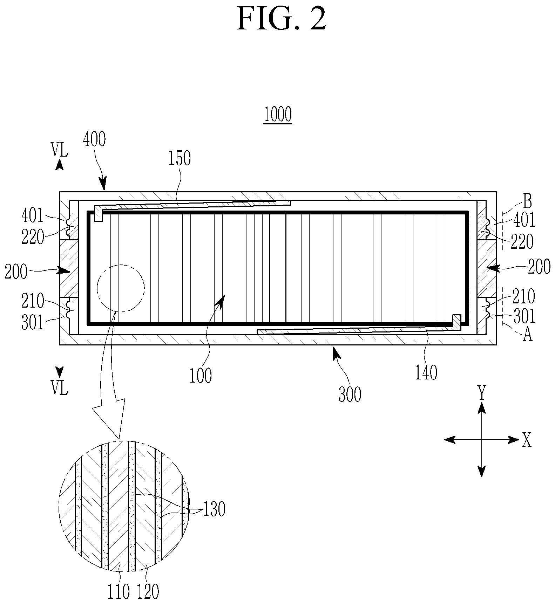

FIG. 1 is a perspective view showing a button cell according to the embodiments. FIG. 2 is a cross-sectional view taken along a line II-II of FIG. 1.

Referring to FIG. 1 and FIG. 2, the button cell 1000 according to the embodiments may be a rechargeable battery capable of charging and discharging, and may include an electrode assembly 100, a plastic auxiliary member 200, a first case 300, and a second case 400.

The electrode assembly 100 may be accommodated inside the plastic auxiliary member 200, the first case 300, and the second case 400 that are coupled to each other. A first end portion including a lower portion of the electrode assembly 100 may face the first case 300, a second end portion including an upper portion of the electrode assembly 100 may face the second case 400, and an edge including a side portion of the electrode assembly 100 may face the plastic auxiliary member 200. For example, the first end portion of the electrode assembly 100 may include the lower portion, but the present disclosure is not limited thereto, and the first end portion of the electrode assembly 100 may include the upper portion of the electrode assembly 100. As another example, the second end portion of the electrode assembly 100 may include the upper portion, but the present disclosure is not limited thereto, and the second end portion of the electrode assembly 100 may include the lower portion of the electrode assembly 100. The edge of the electrode assembly 100 may face the plastic auxiliary member 200 in a first direction X, the lower portion of the electrode assembly 100 may face the first case 300 in a second direction Y crossing the first direction X, and the upper portion of the electrode assembly 100 may face the second case 400 in the second direction Y.

Here, the first direction X may include a horizontal direction of the button cell 1000, and the second direction Y may include a vertical direction of the button cell 1000. For example, the horizontal direction of the button cell 1000 may include a diameter direction or a width direction of the button cell 1000 with a cylindrical shape, but the present disclosure is not limited thereto. As another example, the vertical direction of the button cell 1000 may include a thickness direction or a height direction of the button cell 1000 with the cylindrical shape, but the present disclosure is not limited thereto. In case the button cell is cylindrical, the second direction Y may be parallel to a central axis of the cylindrical form of the button cell or may be parallel to the thickness or height direction of the cylindrical button cell. The first case 300 and the second case 400 may be arranged at a distance to each other in the second direction Y and with the plastic auxiliary member 200 between the first case 300 and the second case 200.

The upper and lower portions of the electrode assembly 100 may have a planar shape parallel to one another, and the edge of the electrode assembly 100 may have a circular column shape, but the present disclosure is not limited thereto.

The electrode assembly 100 may include a first electrode 110, a second electrode 120, a separator 130, a first electrode tab 140, and a second electrode tab 150.

The first electrode 110 and the second electrode 120 may be spaced apart from each other, and the separator 130 for insulation may be disposed between the first electrode 110 and the second electrode 120. The first electrode 110 may be an anode and the second electrode 120 may be a cathode, but the present disclosure is not limited thereto, and the first electrode 110 may be a cathode and the second electrode 120 may be an anode.

The first electrode 110 may have a shape of a band extending in one direction, and may include an anode coated region that is a region where an anode active material layer is coated to a current collector of a metal foil (for example, a Cu foil) and an anode uncoated region that is a region where an active material is not coated. The anode uncoated region may be disposed at one end portion in an extending direction of the first electrode 110.

The second electrode 120 may have a band shape that is spaced apart from the first electrode 110 to extend in one direction with the separator 130 interposed therebetween, and may include a cathode coated region that is a region where a cathode active material layer is coated to a current collector of a metal foil (for example, an Al foil) and a cathode uncoated region that is a region where an active material is not coated. The cathode uncoated region may be disposed at one end portion in an extending direction of the second electrode 120.

The separator 130 may extend in one direction between the first electrode 110 and the second electrode 120 to prevent a short circuit between the first electrode 110 and the second electrode 120.

The first electrode 110, the separator 130, and the second electrode 120 may be sequentially stacked and wound in a jelly roll shape around the second direction Y including the vertical direction of the button cell 1000, but the present disclosure is not limited thereto, and they may be formed in various known shapes.

The first electrode tab 140 may extend from the first electrode 110 of the electrode assembly 100 to the case 300. For example, the first electrode tab 140 may integrally extend from the first electrode 110, or may be attached to the first electrode 110 to extend from the first electrode 110. The first electrode tab 140 may be coupled to the first case 300 to connect the first electrode 110 and the first case 300. The first electrode tab 140 may contact the first electrode 110 and the first case 300. The first electrode tab 140 may be welded to an inner surface of the first case 300, but the present disclosure is not limited thereto, and the first electrode tab 140 may contact the inner surface of the first case 300. By the first electrode tab 140, the first case 300 may have the same polarity as that of the first electrode 110.

The second electrode tab 150 may extend from the second electrode 120 of the electrode assembly 100 to the second case 400. For example, the second electrode tab 150 may integrally extend from the second electrode 120, or may be attached to the second electrode 120 to extend from the second electrode 120. The second electrode tab 150 may be coupled to the second case 400 to connect the second electrode 120 and the second case 400. The second electrode tab 150 may contact the second electrode 120 and the second case 400. The second electrode tab 150 may be welded to an inner surface of the second case 400, but the present disclosure is not limited thereto, and the second electrode tab 150 may contact the inner surface of the second case 400. By the second electrode tab 150, the second case 400 may have the same polarity as that of the second electrode 120.

A center pin penetrating a center of the electrode assembly 100 in the vertical direction of the button cell 1000 may be disposed at a central portion of the electrode assembly 100, and the center pin may respectively support the first electrode tab 140 and the second electrode tab 150 in the first case 300 and the second case 400, but the present disclosure is not limited thereto. For example, the center pin may have a columnar shape in which a space is formed at a central portion thereof in the vertical direction of the button cell 1000, but the present disclosure is not limited thereto, and the center pin may have various known shapes.

The plastic auxiliary member 200 may surround an edge of the electrode assembly 100 in the first direction X. The plastic auxiliary member 200 may be disposed between the first case 300 and the second case 400. The plastic auxiliary member 200 may be coupled to the first case 300 and the second case 400 to seal the electrode assembly 100. For example, the plastic auxiliary member 200, the first case 300, and the second case 400 may seal the electrode assembly 100. The plastic auxiliary member 200 may be exposed to outside the button cell between the first case 300 and the second case 400. The plastic auxiliary member 200 may overlap the first case 300 and the second case 400 in the first direction X. For example, the plastic auxiliary member 200 may include at least one of polypropylene, polyimide, and the like, but the present disclosure is not limited thereto, and the plastic auxiliary member may include various known resins. As another example, the plastic auxiliary member 200 may include at least one of a phenol resin, a urea resin, a melamine resin, an epoxy resin, a polyester resin, a polystyrene resin, a polyethylene resin, a polyvinyl chloride resin, and the like. An end portion of the plastic auxiliary member 200, an end portion of the first case 300, and an end portion of the second case 400 disposed in the first direction X may be disposed on a virtual extension line VL extending in the second direction Y. The end portion of the plastic auxiliary member 200, the end portion of the first case 300, and the end portion of the second case 400 disposed in the first direction X may not protrude outside the virtual extension line VL. Hence, at least two of the first case 300, the second case 400 and the plastic auxiliary member 200 may be aligned with each other such that none of the at least two of the first case 300, the second case 400 and the plastic auxiliary member 200 protrudes from the other one of the at least two of the first case 300, the second case 400 and the plastic auxiliary member 200 in the first direction X.

The plastic auxiliary member 200 may be formed and e.g. rolled with and coupled to the first case 300 and the second case 400, but the present disclosure is not limited thereto.

The plastic auxiliary member 200 may include a first adhesive portion 210 and a second adhesive portion 220.

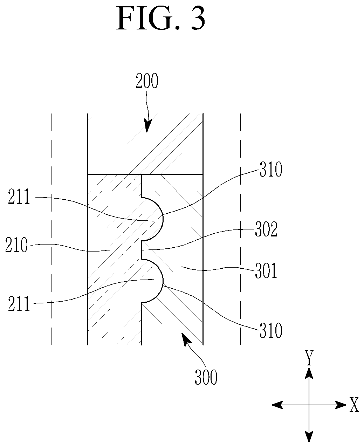

FIG. 3 is an enlarged view of a portion A of FIG. 2.

Referring to FIG. 2 and FIG. 3, the first adhesive portion 210 may protrude in the first case 300 direction along the second direction Y. The first adhesive portion 210 may be coupled to an inner surface 302 of the first case 300. For example, the first adhesive portion 210 may be coupled to the inner surface 302 of a side wall 301 of the first case 300, but the present disclosure is not limited thereto, and the first adhesive portion 210 may be coupled to the inner surface 302 of a portion of the first case 300. The first adhesive portion 210 may include a first protruding portion 211 protruding toward the inner surface 302 of the first case 300 along the first direction X.

The first protruding portion 211 may include a plurality of first protruding portions (or a plurality of first protruding parts) 211, and the plurality of first protruding parts 211 may be coupled to the inner surface 302 of the first case 300. The first protruding portion 211 may be inserted into a first recessed portion 310 recessed from the inner surface 302 of the first case 300 to support the first case 300. The first protruding portion 211 may be rolled with and coupled to the first recessed portion 310 of the first case 300, but the present disclosure is not limited thereto. The first protruding portion 211 may have a semicircular shape, but the present disclosure is not limited thereto, and the first protruding portion may have a polygonal shape such as a triangular shape, a quadrangular shape, a pentagonal shape, a hexagonal shape, a heptangular shape, an octagonal shape, or the like, an oval shape, a loop shape, or the like.

The first protruding portion 211 may have an uneven shape coupled to the inner surface 302 of the first case 300, but the present disclosure is not limited thereto.

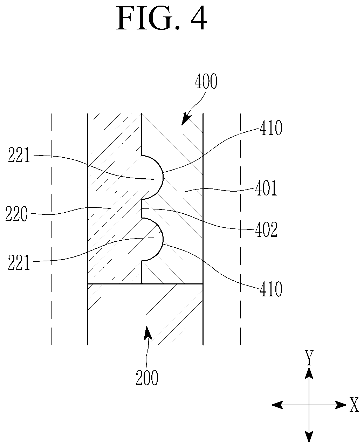

FIG. 4 is an enlarged view of a portion B of FIG. 2.

Referring to FIG. 2 and FIG. 4, the second adhesive portion 220 may protrude toward the second case 400 along the second direction Y. The second adhesive portion 220 may be coupled to an inner surface 402 of the second case 400. For example, the second adhesive portion 220 may be coupled to the inner surface 402 of a side wall 401 of the second case 400, but the present disclosure is not limited thereto, and the second adhesive portion 220 may be coupled to the inner surface 402 of a portion of the second case 400. The second adhesive portion 220 may include a second protruding portion 221 protruding toward the inner surface 402 of the second case 400 along the first direction X.

The second protruding portion 221 may include a plurality of second protruding portions (or a plurality of second protruding parts) 221, and the plurality of second protruding parts 221 may be coupled to the inner surface 402 of the second case 400. The second protruding portion 221 may be inserted into a second recessed portion 410 recessed from the inner surface 402 of the second case 400 to support the second case 400. The second protruding portion 221 may be rolled with and coupled to the second recessed portion 410 of the second case 400, but the present disclosure is not limited thereto. The second protruding portion 221 may have a semicircular shape, but the present disclosure is not limited thereto, and the second protruding portion may have a polygonal shape such as a triangular shape, a quadrangular shape, a pentagonal shape, a hexagonal shape, a heptangular shape, an octagonal shape, or the like, an oval shape, a loop shape, or the like.

The second protruding portion 221 may have an uneven shape coupled to the inner surface 402 of the second case 400, but the present disclosure is not limited thereto.

Referring to FIG. 2 and FIG. 3, the first case 300 may be connected to the first electrode 110 of the electrode assembly 100 to accommodate the electrode assembly 100 together with the plastic auxiliary member 200 and the second case 400. The first case 300 may be coupled to the plastic auxiliary member 200 to cover a lower portion of the electrode assembly 100 in the second direction Y. Because the first case 300 is welded to the first electrode tab 140 to be connected to the first electrode 110 of the electrode assembly 100, the first case 300 may have the same polarity as that of the first electrode 110. The first case 300 may have a cylindrical can shape accommodating the lower portion of the electrode assembly 100 with a jelly roll shape, but the present disclosure is not limited thereto, and the first case 300 may have various known shapes. The first case 300 may accommodate the electrode assembly 100 and various known electrolytes together with the plastic auxiliary member 200 and the second case 400. An outer surface of the first case 300 may be a first electrode terminal of the button cell 1000, but the present disclosure is not limited thereto. In this circumstance, an outer surface of the second case 400 may be a second electrode terminal of the button cell 1000, but the present disclosure is not limited thereto. The first case 300 may include the first recessed portion 310 into which the first protruding portion 211 of the plastic auxiliary member 200 is inserted. The first recessed portion 310 may be recessed from or into the inner surface 302 of the side wall 301 of the first case 300.

The first recessed portion 310 may include a plurality of first recessed parts 310, and the plurality of first recessed parts 310 may be coupled to the first protruding parts 211 of the plastic auxiliary member 200. The first recessed portion 310 may be rolled with and coupled to the first protruding portion 211 of the plastic auxiliary member 200, but the present disclosure is not limited thereto. The first recessed portion 310 may have a space with a semicircular shape corresponding to the first protruding portion 211, but the present disclosure is not limited thereto, and the first recessed portion may have a space with a polygonal shape such as a triangular shape, a quadrangular shape, a pentagonal shape, a hexagonal shape, a heptangular shape, an octagonal shape, or the like, an oval shape, a loop shape, or the like.

The first recessed portion 310 may have an uneven shape coupled to the plastic auxiliary member 200, but the present disclosure is not limited thereto.

For example, the first case 300 may include a protruding structure, and the plastic auxiliary member 200 may include a recessed structure into which the protruding structure is inserted.

The plastic auxiliary member 200 may be disposed between the first case 300 and the second case 400, and the first case 300 may not overlap the second case 400 in the first direction X. An end portion of the first case 300, an end portion of the plastic auxiliary member 200, and an end portion of the second case 400 disposed in the first direction X may be disposed on the virtual extension line VL extending in the second direction Y. The end portion of the first case 300, the end portion of the plastic auxiliary member 200, and the end portion of the second case 400 disposed in the first direction X may not protrude outside the virtual extension line VL. The first case 300 may be rolled with and coupled to the plastic auxiliary member 200, but the present disclosure is not limited thereto.

For example, the outer surface of the first case 300 may be coated with a plating layer, but the present disclosure is not limited thereto, and various known coating layers may be coated on the outer surface of the first case 300. The first case 300 may include stainless steel, but the present disclosure is not limited thereto, and the first case may include various known metals.

Referring to FIG. 2 and FIG. 4, the second case 400 may be connected to the second electrode 120 of the electrode assembly 100 to accommodate the electrode assembly 100 together with the plastic auxiliary member 200 and the first case 300. The second case 400 may be coupled to the plastic auxiliary member 200 to cover an upper portion of the electrode assembly 100 in the second direction Y. Because the second case 400 is welded to the second electrode tab 150 to be connected to the second electrode 120 of the electrode assembly 100, the second case 400 may have the same polarity as that of the second electrode 120. The second case 400 may have a cylindrical can shape accommodating the upper portion of the electrode assembly 100 with a jelly roll shape, but the present disclosure is not limited thereto, and the second case 400 may have various known shapes. The second case 400 may accommodate the electrode assembly 100 and various known electrolytes together with the plastic auxiliary member 200 and the first case 300. An outer surface of the second case 400 may be a second electrode terminal of the button cell 1000, but the present disclosure is not limited thereto. In this case, an outer surface of the first case 300 may be a first electrode terminal of the button cell 1000, but the present disclosure is not limited thereto. The second case 400 may include the second recessed portion 410 into which the second protruding portion 221 of the plastic auxiliary member 200 is inserted. The second recessed portion 410 may be recessed from or into the inner surface 402 of the side wall 401 of the second case 400.

The second recessed portion 410 may include a plurality of second recessed parts 410, and the plurality of second recessed parts 410 may be coupled to the second protruding parts 221 of the plastic auxiliary member 200. The second recessed portion 410 may be rolled with and coupled to the second protruding portion 221 of the plastic auxiliary member 200, but the present disclosure is not limited thereto. The second recessed portion 410 may have a space with a semicircular shape corresponding to the second protruding portion 221, but the present disclosure is not limited thereto, and the second recessed portion may have a space with a polygonal shape such as a triangular shape, a quadrangular shape, a pentagonal shape, a hexagonal shape, a heptangular shape, an octagonal shape, or the like, an oval shape, a loop shape, or the like.

The second recessed portion 410 may have an uneven shape coupled to the plastic auxiliary member 200, but the present disclosure is not limited thereto.

For example, the second case 400 may include a protruding structure, and the plastic auxiliary member 200 may include a recessed structure into which the protruding structure is inserted.

The plastic auxiliary member 200 may be disposed between the second case 400 and the first case 300, and the second case 400 may not overlap the first case 300 in the first direction X. An end portion of the second case 400, an end portion of the plastic auxiliary member 200, and an end portion of the first case 300 disposed in the first direction X may be disposed on the virtual extension line VL extending in the second direction Y. The end portion of the second case 400, the end portion of the plastic auxiliary member 200, and the end portion of the first case 300 disposed in the first direction X may not protrude outside the virtual extension line VL. The second case 400 may be rolled with and coupled to the plastic auxiliary member 200, but the present disclosure is not limited thereto.

For example, the outer surface of the second case 400 may be coated with a plating layer, but the present disclosure is not limited thereto, and various known coating layers may be coated on the outer surface of the second case 400. The second case 400 may include stainless steel, but the present disclosure is not limited thereto, and the second case may include various known metals.

In the button cell 1000 according to the embodiments, the plastic auxiliary member 200, the first case 300, and the second case 400 may be rolled with and coupled to each other so that the electrode assembly 100 is accommodated therein. Thus, because the first case 300 and the second case 400 are not welded to the plastic auxiliary member 200, the separator 130 or the like of the electrode assembly 100 may be damaged by a welding heat so that a short circuit between the first electrode 110 and the second electrode 120 of the electrode assembly 100 is prevented.

In the button cell 1000 according to the embodiments, the plastic auxiliary member 200, the first case 300, and the second case 400 may be rolled with and coupled to one another so that the electrode assembly 100 is accommodated therein. Thus, because the first case 300 and the second case 400 are not welded to the plastic auxiliary member 200, the electrode assembly 100 may be suppressed from being damaged by a welding heat.

In the button cell 1000 according to the embodiments, the plastic auxiliary member 200, the first case 300, and the second case 400 may be rolled with and coupled to each other so that the electrode assembly 100 is accommodated therein. Thus, the first case 300 and the second case 400 may not be welded to the plastic auxiliary member 200. Therefore, because there is no need to consider a damage to the electrode assembly 100 due to a welding heat, a volume of the electrode assembly 100 may be increased to a maximum so that energy density per volume is improved.

In the button cell 1000 according to the embodiments, the end portion of the first case 300, the end portion of the plastic auxiliary member 200, and the end portion of the second case 400 disposed in the first direction X may be disposed on the virtual extension line VL extending in the second direction Y so that the end portion of the first case 300, the end portion of the plastic auxiliary member 200, and the end portion of the second case 400 disposed in the first direction X do not protrude outside the virtual extension line VL. Thus, because the first case 300, the plastic auxiliary member 200, and the second case 400 are suppressed from interfering with another external component, at least one of the first case 300, the plastic auxiliary member 200, and the second case 400 may be damaged during a manufacturing process of the button cell 1000, during transportation of the button cell 1000, or during a use of the button cell 1000 or a coupling between the plastic auxiliary member 200 and the first case 300 or a coupling between the plastic auxiliary member 200 and the second case 400 may be damaged so that the button cell 1000 is suppressed from being damaged.

In the button cell 1000 according to the embodiments, the first case 300 and the second case 400 that are different electrode terminals coupled to the plastic auxiliary member 200 may not overlap one another in the first direction X, so that a short circuit between the first case 300 and the second case 400 is prevented.

The button cell 1000 having improved energy density per volume while simultaneously preventing a damage due to a welding heat and a damage due to an external interference and preventing a short circuit, may be provided.

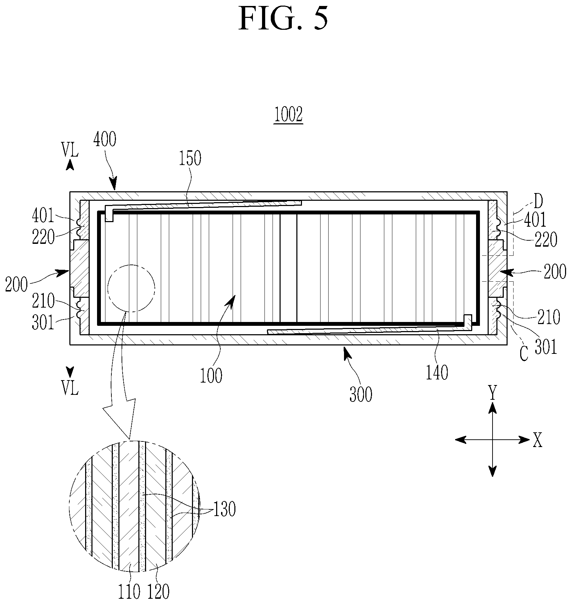

Hereinafter, a button cell according to other embodiments will be described with reference to FIGS. 5 to 7.

Hereinafter, the button cell according to the other embodiments will be described with reference to a portion different from that of the button cell according to the above-described embodiments.

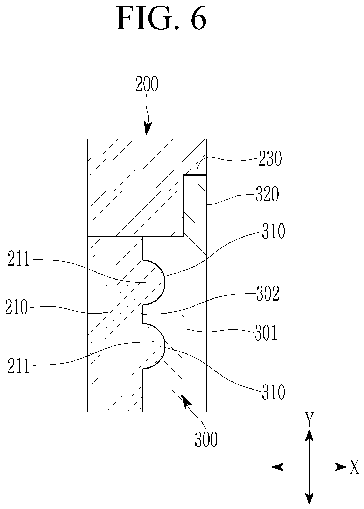

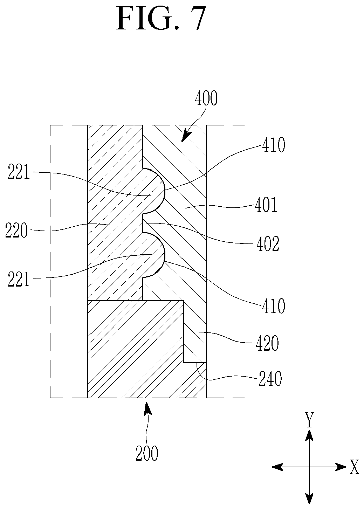

FIG. 5 is a perspective view showing the button cell according to the other embodiments. FIG. 6 is an enlarged view of a portion C of FIG. 5. FIG. 7 is an enlarged view of a portion D of FIG. 5.

Referring to FIGS. 5 to 7, the button cell 1002 according to the other embodiments may include an electrode assembly 100, a plastic auxiliary member 200, a first case 300, and a second case 400.

The plastic auxiliary member 200 may include a first adhesive portion 210, a second adhesive portion 220, a first auxiliary recessed portion 230, and a second auxiliary recessed portion 240.

The first auxiliary recessed portion 230 may be recessed in the second direction Y corresponding to a side wall 301 of the first case 300. The side wall 301 of the first case 300 may be inserted into the first auxiliary recessed portion 230. For example, a first auxiliary protruding portion 320 protruding from the side wall 301 of the first case 300 may be inserted into the first auxiliary recessed portion 230. The first auxiliary recessed portion 230 may support the first auxiliary protruding portion 320 of the first case 300. The first auxiliary recessed portion 230 may be rolled with and coupled to the first auxiliary protruding portion 320, but the present disclosure is not limited thereto.

The second auxiliary recessed portion 240 may be recessed in the second direction Y corresponding to a side wall 401 of the second case 400. The side wall 401 of the second case 400 may be inserted into the second auxiliary recessed portion 240. For example, a second auxiliary protruding portion 420 protruding from the side wall 401 of the second case 400 may be inserted into the second auxiliary recessed portion 240. The second auxiliary recessed portion 240 may support the second auxiliary protruding portion 420 of the second case 400. The second auxiliary recessed portion 240 may be rolled with and coupled to the second auxiliary protruding portion 420, but the present disclosure is not limited thereto.

The first case 300 may include a first recessed portion 310 and the first auxiliary protruding portion 320.

The first auxiliary protruding portion 320 may protrude from the side wall 301 of the first case 300 toward the first auxiliary recessed portion 230 to be inserted into the first auxiliary recessed portion 230.

The first auxiliary protruding portion 320 may be coupled to the first auxiliary recessed portion 230 of the plastic auxiliary member 200. The first auxiliary protruding portion 320 may be rolled with and coupled to the first auxiliary recessed portion 230 of the plastic auxiliary member 200, but the present disclosure is not limited thereto.

For example, the first case 300 may include an auxiliary recessed structure, and the plastic auxiliary member 200 may include an auxiliary protruding structure inserted into the auxiliary recessed structure.

The second case 400 may include a second recessed portion 410 and the second auxiliary protruding portion 420.

The second auxiliary protruding portion 420 may protrude from the side wall 401 of the second case 400 toward the second auxiliary recessed portion 240 to be inserted into the second auxiliary recessed portion 240. The second auxiliary protruding portion 420 may be coupled to the second auxiliary recessed portion 240 of the plastic auxiliary member 200. The second auxiliary protruding portion 420 may be rolled with and coupled to the second auxiliary recessed portion 240 of the plastic auxiliary member 200, but the present disclosure is not limited thereto.

For example, the second case 400 may include an auxiliary recessed structure, and the plastic auxiliary member 200 may include an auxiliary protruding structure inserted into the auxiliary recessed structure.

In the button cell 1002 according to the other embodiments, the plastic auxiliary member 200, the first case 300, and the second case 400 may be rolled with and coupled to one another so that the electrode assembly 100 is accommodated therein. Thus, because the first case 300 and the second case 400 are not welded to the plastic auxiliary member 200, the separator 130 or the like of the electrode assembly 100 may be damaged by a welding heat so that a short circuit between the first electrode 110 and the second electrode 120 of the electrode assembly 100 is prevented.

In the button cell 1002 according to the other embodiments, the plastic auxiliary member 200, the first case 300, and the second case 400 may be rolled with and coupled to each other so that the electrode assembly 100 is accommodated therein. Thus, because the first case 300 and the second case 400 are not welded to the plastic auxiliary member 200, the electrode assembly 100 may be suppressed from being damaged by a welding heat.

In the button cell 1002 according to the other embodiments, the plastic auxiliary member 200, the first case 300, and the second case 400 may be rolled with and coupled to one another so that the electrode assembly 100 is accommodated therein. Thus, the first case 300 and the second case 400 may not be welded to the plastic auxiliary member 200. Therefore, because there is no need to consider a damage to the electrode assembly 100 due to a welding heat, a volume of the electrode assembly 100 may be increased to a maximum so that energy density per volume is improved.

In the button cell 1002 according to the other embodiments, the end portion of the first case 300, the end portion of the plastic auxiliary member 200, and the end portion of the second case 400 disposed in the first direction X may be disposed on the virtual extension line VL extending in the second direction Y so that the end portion of the first case 300, the end portion of the plastic auxiliary member 200, and the end portion of the second case 400 disposed in the first direction X do not protrude outside the virtual extension line VL. Thus, because the first case 300, the plastic auxiliary member 200, and the second case 400 are suppressed from interfering with another external component, at least one of the first case 300, the plastic auxiliary member 200, and the second case 400 may be damaged during a manufacturing process of the button cell 1002, during transportation of the button cell 1002, or during a use of the button cell 1002 or a coupling between the plastic auxiliary member 200 and the first case 300 or a coupling between the plastic auxiliary member 200 and the second case 400 may be damaged so that the button cell 1002 is suppressed from being damaged.

In the button cell 1002 according to the other embodiments, the first case 300 and the second case 400 that are different electrode terminals coupled to the plastic auxiliary member 200 may not overlap one another in the first direction X, so that a short circuit between the first case 300 and the second case 400 is prevented.

The button cell 1002 having improved energy density per volume while simultaneously preventing a damage due to a welding heat and a damage due to an external interference and preventing a short circuit, may be provided.

A compound (i.e., a lithiated intercalation compound) capable of reversible intercalation and deintercalation of lithium may be used as the cathode active material (or a positive electrode active material). For example, one or more types of composite oxides of a metal selected from cobalt, manganese, nickel, and a combination thereof and lithium may be used as the positive electrode active material.

The composite oxide may be lithium transition metal composite oxide, and for example, the composite oxide may include lithium nickel-based oxide, lithium cobalt-based oxide, lithium manganese-based oxide, a lithium iron phosphate-based compound, cobalt-free nickel-manganese-based oxide, or a combination thereof.

As an example, a compound expressed by any one of the following chemical formulas may be used as the positive electrode active material. LiₐA_{1-b}X_{b}O_{2-c}D_{c} (0.90 ≤ a ≤ 1.8, 0 ≤ b≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0< α <2); LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0< a <2); LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); and LiₐFePO₄ (0.90 ≤ a ≤ 1.8).

In the above formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L¹ may be Mn, Al, or a combination thereof.

The positive electrode for a lithium rechargeable battery may include a current collector and a positive electrode active material layer formed on the current collector. The positive electrode active material layer may include a positive electrode active material, and may further include a binder and/or a conductive material.

A content of the positive electrode active material may be 90 wt% to 99.5 wt% based on 100 wt% of the positive electrode active material layer, and a content of each of the binder and the conductive material may be 0.5 wt% to 5 wt% based on 100 wt% of the positive electrode active material layer.

Al may be used as the current collector, but the present disclosure is not limited thereto.

The anode active material (or a negative electrode active material) may include a material capable of reversible intercalation and deintercalation of a lithium ion, a lithium metal, an alloy of the lithium metal, a material capable of doping and dedoping lithium, or transition metal oxide.

The material capable of reversible intercalation and deintercalation of the lithium ion may include a carbon-based negative electrode active material (for example, crystalline carbon, amorphous carbon, or a combination thereof). An example of the crystalline carbon may include graphite such as natural graphite or artificial graphite, and an example of the amorphous carbon may include soft carbon, hard carbon, mesophase pitch carbide, fired cokes, or the like.

A Si-based negative electrode active material or a Sn-based negative electrode active material may be used as the material capable of doping and dedoping lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to embodiments, the silicon-carbon composite may have a shape in which the amorphous carbon is coated on a surface of a silicon particle.

The silicon-carbon composite may further include crystalline carbon. For example, the silicon-carbon composite may include a core including the crystalline carbon and a silicon particle and an amorphous carbon coating layer disposed on a surface of the core.

The negative electrode for the lithium rechargeable battery may include a current collector and a negative electrode active material layer formed on the current collector. The negative electrode active material layer may include a negative electrode active material, and may further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

A non-aqueous binder, an aqueous binder, a dry binder, or a combination thereof may be used as the binder. If the aqueous binder is used as the binder, it may further include a cellulose-based compound capable of imparting viscosity.

The current collector of the negative electrode may be selected from a copper foil, a nickel foil, a stainless steel foil, a titanium foil, a nickel foam, a copper foam, a polymer substrate coated with a conductive metal, and a combination thereof.

An electrolyte for the lithium rechargeable battery may include may include a non-aqueous organic solvent and a lithium salt.

The non-aqueous organic solvent may serve as a medium through which ions involved in an electrochemical reaction of the battery may move.

The non-aqueous organic solvent may be a carbonate-based solvent, an ester-based solvent, an ether-based solvent, a ketone-based solvent, an alcohol-based solvent, an aprotic solvent, or a combination thereof, and may be used alone or in combination of two or more types.

If the carbonate-based solvent is used, a mixture of cyclic carbonate and linear carbonate may be used.

Depending on a type of the lithium rechargeable battery, the separator may exist between the positive and negative electrodes. Polyethylene, polypropylene, polyvinylidene fluoride, or a multilayer film with two or more layers thereof may be used as the separator.

The separator may include a porous substrate and a coating layer including an organic material, an inorganic material, or a combination thereof disposed on one surface or both surfaces of the porous substrate.

The organic material may include a polyvinylidenefluoride-based polymer or a (metha)acryl-based polymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic material and the inorganic material may be mixed in one coating layer, or a coating layer including the organic material and a coating layer including the inorganic material may be stacked.

While this disclosure has been described in connection with what is presently considered to be practical embodiments, it is to be understood that the disclosure is not limited to the disclosed embodiments, but, on the contrary, is intended to cover various modifications included within the scope of the appended claims.

### Reference numerals

- 100: electrode assembly
- 110: first electrode
- 120: second electrode
- 130: separator
- 200: plastic auxiliary member
- 210: first adhesive portion
- 211: first protruding portion
- 220: second adhesive portion
- 221: second protruding portion
- 230: first auxiliary recessed portion
- 240: second auxiliary recessed portion
- 300: first case
- 301: side wall
- 302: inner surface
- 310: first recessed portion
- 320: first auxiliary protruding portion
- 400: second case
- 402: inner surface
- 410: second recessed portion
- 420: second auxiliary recessed portion
- 1000: button cell

- VL: virtual extension line
- X: first direction
- Y: second direction

## Claims

1. A button cell (1000) comprising:
an electrode assembly (100) that includes a first electrode (110), a second electrode (120), and a separator (130) disposed between the first electrode (110) and the second electrode (120);
a plastic auxiliary member (200) that surrounds an edge of the electrode assembly (100) in a first direction (X);
a first case (300) that is coupled to the plastic auxiliary member (200) to cover a first end portion of the electrode assembly (100) in a second direction (Y) crossing the first direction (X) and is connected to the first electrode (110); and
a second case (400) that is coupled to the plastic auxiliary member (200) to cover a second end portion of the electrode assembly (100) in the second direction (Y) and is connected to the second electrode (120),
wherein the first case (300) and the second case (400) are free from mutual overlap in the first direction (X).

2. The button cell (1000) as claimed in claim 1, wherein the plastic auxiliary member (200), the first case (300), and the second case (400) seal the electrode assembly (100) and/or wherein the plastic auxiliary member (200) is exposed to outside the button cell (1000) between the first case (300) and the second case (400).

3. The button cell (1000) as claimed in claim 1 or 2, wherein an end portion of the plastic auxiliary member (200), an end portion of the first case (300), and an end portion of the second case (400) that are disposed in the first direction (X) are disposed on a virtual extension line (VL) extending in the second direction (Y).

4. The button cell (100) as claimed in any of claims 1 to 3, wherein the first direction (X) includes a horizontal direction of the button cell (1000) and/or wherein the second direction (Y) includes a vertical direction of the button cell (1000).

5. The button cell (1000) as claimed in any of claims 1 to 4, wherein the first end portion of the electrode assembly (100) includes a lower portion of the electrode assembly (100) and/or wherein the second end portion of the electrode assembly (100) includes an upper portion of the electrode assembly (100).

6. The button cell (1000) as claimed in any of claims 1 to 5, wherein the plastic auxiliary member (200) comprises a first adhesive portion (210) protruding toward the first case (300) and is coupled to an inner surface (302) of the first case (300).

7. The button cell (1000) as claimed in claim 6, wherein the first adhesive portion (210) comprises a first protruding portion (211) that protrudes toward the inner surface (302) of the first case (300).

8. The button cell (1000) as claimed in claim 7, wherein the first case (300) comprises a first recessed portion (310) into which the first protruding portion (211) is inserted.

9. The button cell as claimed in any of claims 6 to 8, wherein the plastic auxiliary member (200) further comprises a first auxiliary recessed portion (230) into which a side wall (301) of the first case (300) is inserted.

10. The button cell (1000) as claimed in claim 9, wherein the first case (300) comprises a first auxiliary protruding portion (320) that protrudes from the side wall (301) of the first case (300) toward the first auxiliary recessed portion (230) and is inserted into the first auxiliary recessed portion (230).

11. The button cell (1000) as claimed in any of claims 1 to 8, wherein the plastic auxiliary member (200) comprises a second adhesive portion (220) that protrudes toward the second case (400) and is coupled to an inner surface (402) of the second case (400).

12. The button cell (1000) as claimed in claim 11, wherein the second adhesive portion (220) comprises a second protruding portion (221) that protrudes toward the inner surface (402) of the second case (400).

13. The button cell (1000) as claimed in claim 12, wherein the second case (400) comprises a second recessed portion (410) into which the second protruding portion (221) is inserted.

14. The button cell (1000) as claimed in any of claims 11 to 13, wherein the plastic auxiliary member (200) further comprises a second auxiliary recessed portion (240) into which a side wall (301) of the second case (300) is inserted.

15. The button cell (1000) as claimed in claim 14, wherein the second case (400) comprises a second auxiliary protruding portion (420) that protrudes from the side wall (301) of the second case (300) toward the second auxiliary recessed portion (420) and is inserted into the second auxiliary recessed portion (420).
